# EUROPEAN PATENT APPLICATION

(11) **EP 4 793 549 A1**
(43) Date of publication of application: **19.08.2026**
(21) Application number: 26155244.2
(22) Date of filing: 30.01.2026
(51) Int. Cl.: F23R 3/14, F23R 3/28

(54) **NOZZLE FOR COMBUSTOR AND GAS TURBINE INCLUDING SAME**

(30) Priority: 18.02.2025 KR 20250020993
(71) Applicant: Doosan Enerbility Co., Ltd., Seongsan-gu Changwon-si, Gyeongsangnam-do 51711 (KR)
(72) Inventor: SHERSHNYOV, Borys, 51632 Changwon-si (KR)
(74) Representative: Ter Meer Steinmeister & Partner

(57) **Abstract**

A nozzle (1230) for a combustor (1240) and a gas turbine (1300) including the same are provided. The nozzle (1230) for the combustor (1240) includes a center tube (1231) including a fuel passage (1231a) configured to allow fuel to flow therein, a nozzle shroud (1232) surrounding the center tube (1231) and including a shroud chamber (1232a), a plurality of nozzle vanes (1234) disposed between the center tube (1231) and the nozzle shroud (1232), each nozzle vane (1234) configured to guide a fuel flow and spray fuel, and a nozzle rod (1235) arranged offset from each nozzle vane (1234) and configured to spray the fuel between the plurality of nozzle vanes (1234).

## Description

### BACKGROUND

### Field

Apparatuses and methods consistent with exemplary embodiments relate to a nozzle for a combustor and a gas turbine including the same.

### Description of the Related Art

Gas turbines are power plants that mix and combust compressed air from a compressor and fuel, and use high-temperature gas produced by combustion to rotate a turbine. Gas turbines are used to drive generators, aircraft, ships, trains, or the like.

The gas turbine includes a compressor, a combustor, and a turbine. The compressor sucks outside air, compresses the air, and delivers the compressed air to the combustor. The air compressed by the compressor becomes high-pressure and high-temperature. The combustor mixes the compressed air supplied from the compressor with fuel and combusts a mixture to produce combustion gas which is discharged into the turbine. Turbine blades in the turbine are rotated by the combustion gas to generate power. The generated power is used in various fields, including power generation and machinery operation.

Recently, premixed combustion has been employed to enhance combustion efficiency and reduce nitrogen oxide (NOx) emissions. In premixed combustion, compressed air and fuel are pre-mixed and supplied to a combustion chamber.

However, when air and fuel are not uniformly mixed, nitrogen oxides (NOx) emissions increase in regions having a high air-fuel ratio due to locally high temperatures, while carbon monoxide (CO) emissions increase in regions having a low air-fuel ratio due to incomplete combustion.

Furthermore, when air and fuel are mixed unevenly, combustion instability occurs in the combustion chamber, causing combustion to occur ahead of the intended location and potentially resulting in flashback.

### SUMMARY

Aspects of one or more exemplary embodiments provide a nozzle for a combustor and a gas turbine including the same, the nozzle being capable of uniformly mixing air and fuel, thereby reducing emissions of nitrogen oxide (NOx) and carbon monoxide (CO) and suppressing combustion instability and flashback.

Additional aspects will be set forth in part in the description which follows and, in part, will become apparent from the description, or may be learned by practice of the exemplary embodiments.

According to an aspect of an exemplary embodiment, there is provided a nozzle for a combustor, the nozzle including: a center tube including a fuel passage configured to allow fuel to flow therein; a nozzle shroud surrounding the center tube and including a shroud chamber; a plurality of nozzle vanes disposed between the center tube and the nozzle shroud, each nozzle vane configured to guide a fuel flow and spray fuel; and a nozzle rod arranged offset from each nozzle vane and configured to spray the fuel between the plurality of nozzle vanes.

The nozzle rod may be arranged at a position farther forward than the nozzle vane.

The center tube may include a plurality of tube spraying holes formed in a circumferential direction at intervals therebetween, and the tube spraying holes may be connected to the fuel passage.

The nozzle shroud may include a plurality of shroud spraying holes formed in a circumferential direction at intervals therebetween, and the shroud spraying holes may be connected to the shroud chamber.

Each nozzle vane may include a vane cavity therein, and the vane cavity may connect the fuel passage and the shroud chamber.

Each nozzle vane may include a plurality of vane spraying holes formed in a radial direction at intervals therebetween, and the vane spraying holes may be connected to the vane cavity.

The nozzle rod may include a rod cavity formed therein and connected to the shroud chamber.

The nozzle rod may include a plurality of rod spraying holes formed in a radial direction at intervals therebetween, and the rod spraying holes may be connected to the rod cavity.

The rod cavity may have a sectional area that decreases in a direction from a radially outer portion to a radially inner portion.

The nozzle rod may include a plurality of nozzle rods, and the plurality of nozzle rods may be arranged in a ring shape.

According to an aspect of another exemplary embodiment, there is provided a gas turbine including: a compressor configured to compress air introduced from an outside; a combustor configured to mix fuel with the air compressed by the compressor and combust a mixture of the fuel and air to produce combustion gas; and a turbine including a plurality of turbine blades rotated by combustion gas produced by the combustor, wherein the combustor may include a plurality of nozzles configured to spray the fuel and air, wherein each of the plurality of nozzles may include: a center tube including a fuel passage configured to allow the fuel to flow therein; a nozzle shroud surrounding the center tube and including a shroud chamber; a plurality of nozzle vanes disposed between the center tube and the nozzle shroud, each nozzle vane configured to guide a fuel flow and spray fuel; and a nozzle rod arranged offset from each nozzle vane and configured to spray the fuel between the plurality of nozzle vanes.

The center tube may include a plurality of tube spraying holes formed in a circumferential direction at intervals therebetween, and the tube spraying holes may be connected to the fuel passage.

The nozzle shroud may include a plurality of shroud spraying holes formed in a circumferential direction at intervals therebetween, and the shroud spraying holes may be connected to the shroud chamber.

Each nozzle vane may include a vane cavity formed therein, and the vane cavity may connect the fuel passage and the shroud chamber, and the nozzle vane may include a plurality of vane spraying holes formed in a radial direction at intervals therebetween, and the vane spraying holes may be connected to the vane cavity.

The nozzle rod may include a rod cavity formed therein, and the rod cavity may be connected to the shroud chamber, and the nozzle rod may include a plurality of rod spraying holes formed in a radial direction at intervals therebetween, and the rod spraying holes may be connected to the rod cavity.

According to one or more exemplary embodiments, air and fuel can be mixed uniformly, thereby reducing the exhaust of nitrogen oxide (NOx) and carbon monoxide (CO) , and preventing combustion instability and flashback.

### BRIEF DESCRIPTION OF THE DRAWINGS

The above and other aspects will become more apparent from the following description of the exemplary embodiments with reference to the accompanying drawings, in which:
FIG. 1 is a view showing an inside portion of a gas turbine according to a first exemplary embodiment;
FIG. 2 is a view showing a combustor of FIG. 1;
FIG. 3 is a perspective view showing a nozzle for a combustor;
FIG. 4 is a sectional view showing a side section of the nozzle;
FIG. 5 is a sectional view showing a frontal section of the nozzle;
FIG. 6 is an enlarged-perspective view showing a nozzle vane and a nozzle rod;
FIGS. 7A and 7B are views showing the distribution of fuel ratio at a rear end of the nozzle in comparison to a conventional nozzle;
FIG. 8 is a graph showing comparative data in the radial distribution of the fuel ratio of FIGS. 7A and 7B;
FIG. 9 is a sectional view showing a spraying hole of the nozzle of the gas turbine according to a second exemplary embodiment; and
FIG. 10 is a projected-perspective view showing the nozzle rod of the gas turbine according to a third exemplary embodiment.

### DETAILED DESCRIPTION

Various modifications and various embodiments will be described in detail with reference to the accompanying drawings. However, it should be understood that various embodiments are not for limiting the scope of the disclosure to the specific embodiments, but they should be interpreted to include all of modifications, equivalents, additions or substitutions of the embodiments included within the scope disclosed herein.

The terminology used herein is for the purpose of describing specific embodiments only and is not intended to limit the scope of the disclosure. As used herein, the singular forms "a", "an", and "the" are intended to include the plural forms as well, unless the context clearly indicates otherwise. It will be further understood that the terms "comprise", "include", "have" specify the presence of stated features, integers, steps, operations, elements, components, and/or combinations thereof, but do not preclude the presence or addition of one or more other features, integers, steps, operations, elements, components, and/or combinations thereof.

Hereinbelow, exemplary embodiments will be described in detail with reference to the accompanying drawings. It is noted that like reference numerals refer to like parts throughout the various drawings and exemplary embodiments. In certain embodiments, detailed descriptions of known functions and configurations which are deemed to make the gist of the present disclosure obscure will be omitted. For the same reason, some components in the accompanying drawings may be exaggerated, omitted, or simplified.

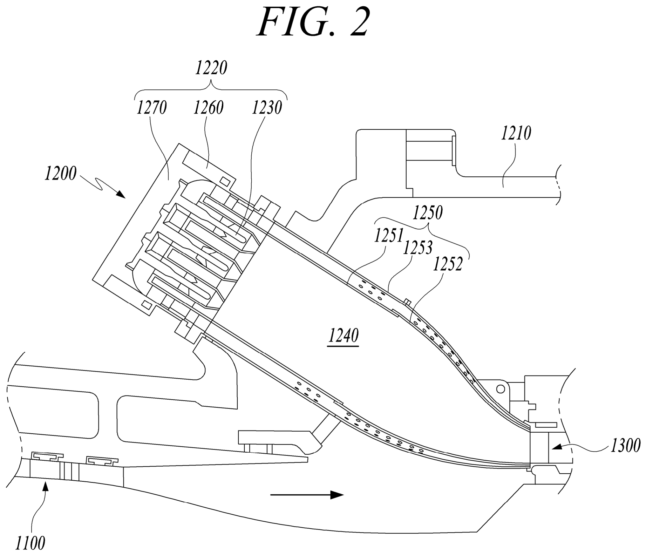

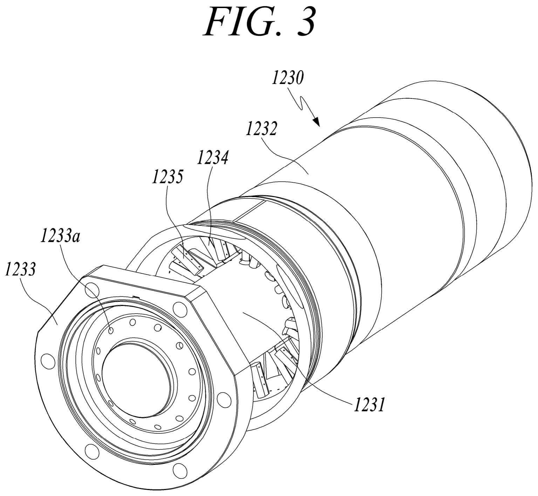

As used herein, the term "longitudinal direction" refers to a direction in which a center tube 1231 of FIG. 3 extends. The term "radial direction" refers to a direction in which a radius of the center tube 1231 increases or decreases, and the term "circumferential direction" refers to a circumferential direction of the center tube 1231. As used herein, "upper stream" and "lower stream" are relative terms defined with respect to a flow direction of air or fuel, such that air or fuel is introduced at "upper stream" and discharged at "lower stream". Furthermore, the term "front" refers to a direction in which a nozzle 1230 in FIG. 2 faces a head plate 1270, and the term "rear" refers to a direction in which the nozzle 1230 faces a combustor 1240.

Hereinbelow, a gas turbine according to a first exemplary embodiment will be described with reference to the accompanying drawings.

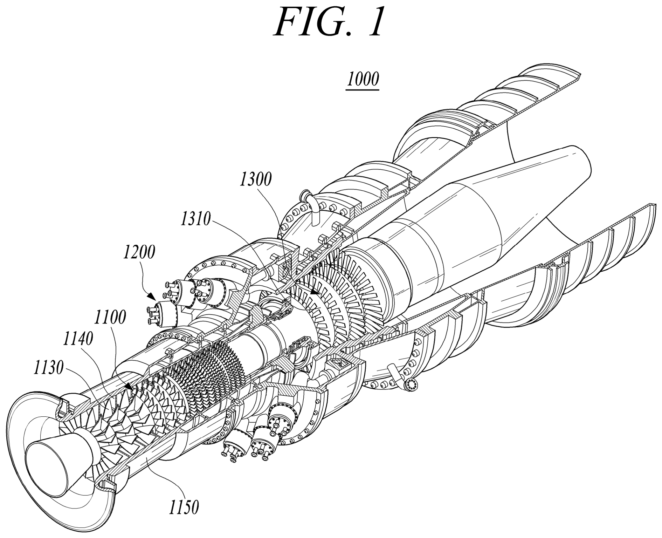

FIG. 1 is a view showing an inner portion of the gas turbine according to a first exemplary embodiment. FIG. 2 is a view showing a combustor of FIG. 1.

An ideal thermodynamic cycle of a gas turbine 1000 may ideally comply with the Brayton cycle. The Brayton cycle includes four processes, which include isentropic compression (i.e., an adiabatic compression) process, isobaric heating process, isentropic expansion (i.e., an adiabatic expansion) process, and isobaric cooling process. In other words, in the Brayton cycle, thermal energy may be released by combustion of fuel in an isobaric environment after external air is sucked and compressed into high pressure air, hot combustion gas may be expanded to be converted into kinetic energy, and exhaust gas with residual energy may be discharged to the outside. As such, the Brayton cycle may consist of four thermodynamic processes of compression, heating, expansion, and cooling.

The gas turbine 1000 implementing the Brayton cycle may include a compressor 1100, a combustor 1200, and a turbine 1300. Although the following description will refer to FIG. 1, the present disclosure may also be broadly applied to other turbine engine having the same configuration as the gas turbine 1000 shown in FIG. 1.

Referring to FIG. 1, the compressor 1100 of the gas turbine 1000 may suck and compress external air. The compressor 1100 may supply compressed air from compressor blades 1130 to the combustor 1200, and also supply cooling air to a high-temperature area in the gas turbine 1000. Here, because the sucked air is compressed in the compressor 1100 through the adiabatic compression process, the pressure and temperature of the air passing through the compressor 1100 increase.

The compressor 1100 is designed in the form of a centrifugal or axial compressor. The centrifugal compressor is used in small gas turbines, whereas a multi-stage axial compressor is applied to the large gas turbine 1000 shown in FIG. 1 to compress a large amount of air. In the multistage axial compressor 1100, a compressor blade 1130 compresses introduced air by rotating with rotation of a rotor disc and transfers compressed air to a compressor vane 1140 disposed at a following stage. The air is compressed gradually to a high pressures while passing through the multistage compressor blades 1130.

The compressor vane 1140 is mounted inside a housing 1150 in such a way that a plurality of compressor vanes 1140 form each stages. The compressor vanes 1140 guide the compressed air moved from the compressor blades 1130 disposed at a preceding stage toward the compressor blades 1130 disposed at a following stage. For example, at least a portion of the plurality of compressor vanes 1140 may be rotatably mounted within a preset range to adjust the inlet amount of air.

The compressor 1100 may be driven using a portion of the power output from the turbine 1300. To this end, as shown in FIG. 1, a rotating shaft of the compressor 1100 and a rotating shaft of the turbine 1300 may be directly connected to each other. For the large-scale gas turbine 1000, nearly half of the power generated by the turbine 1300 may be consumed to drive the compressor 1100. Therefore, improving the efficiency of the compressor 1100 directly influences improving the entire efficiency of the gas turbine 1000.

The turbine 1300 includes a rotor disc 1310 and a plurality of turbine blades and a plurality of turbine vanes arranged radially on the rotor disc 1310. The rotor disc 1310 has a circular plate shape, and a plurality of grooves are formed in an outer circumferential portion thereof. The grooves are formed with curved surfaces so that the turbine blades are inserted into the grooves, and the turbine vanes are mounted in a turbine casing. The turbine vanes are secured so as not to rotate and guide the flow direction of the combustion gas passing through the turbine blades. The turbine blades generate a rotating force while rotating by the combustion gas.

The combustor 1200 mixes compressed air supplied from the outlet of the compressor 1100 with fuel and combusts them at uniform pressure to produce high-energy combustion gas. FIG. 2 shows an example of the combustor 1200 used in the gas turbine 1000. The combustor 1200 may include a combustor casing 1210, a burner 1220, and a duct assembly 1250.

The combustor casing 1210 may cover a plurality of burners 1220 and have a circular shape. The plurality of burners 1220 may be arranged at a lower stream of the compressor 1100 and arranged along the ring-shaped combustor casing 1210. Each burner 1220 includes a plurality of nozzles 1230, and fuel discharged from the nozzles 1230 is mixed with air at an appropriate ratio to form a mixture suitable for combustion.

The gas turbine 1000 may use gas fuel, liquid fuel, or a combination thereof. It is desirable to establish combustion conditions that reduce the emission of exhaust gases subject to regulatory limits, such as carbon monoxide and nitrogen oxides. In recent years, premixed combustion has been widely employed. Although premixed combustion is relatively difficult to control, it provides advantages in that combustion temperatures are lowered and combustion is made more uniform, thereby reducing exhaust emissions.

In premixed combustion, compressed air is mixed with fuel discharged from the nozzle 1230 and then introduced into the combustor 1240. The initial ignition of premixed gas is performed using an igniter, and once combustion is stabilized, the combustion is maintained by supplying fuel and air.

Compressed air flows along an outer surface of the duct assembly 1250 in which high-temperature combustion gas flows, the burner 1220 and the turbine 1300 being connected to the duct assembly 1250, and is supplied to the nozzle 1230. In this process, the duct assembly 1250, which is heated by high-temperature combustion gas, is appropriately cooled.

Referring to FIG. 2, the duct assembly 1250 may include a liner 1251, a transition piece 1252, and a flow sleeve 1253. The duct assembly 1250 has a double-wall structure in which the flow sleeve 1253 surrounds the liner 1251 and the transition piece 1252. The compressed air penetrates into a ring-shaped space in the flow sleeve 1253 to cool the liner 1251 and the transition piece 1252.

The liner 1251 is a tubular member connected to the burner 1220 of the combustor 1200, and a combustor chamber 1240 is an internal space of the liner 1251. The liner 1251 has a longitudinal first end portion coupled to the burner 1220, and a longitudinal second end portion coupled to the transition piece 1252.

The transition piece 1252 is connected to an entrance of the turbine 1300 to guide high-temperature combustion gas toward the turbine 1300. The transition piece 1252 has a longitudinal first end portion coupled to the liner 1251 and a longitudinal second end portion coupled to the turbine 1300. The flow sleeve 1253 protects both the liner 1251 and the transition piece 1252 to prevent high-temperature heat from being emitted outward directly.

The burner 1220 may include a nozzle casing 1260, a plurality of nozzles 1230, and the head plate 1270.

The nozzle casing 1260 is formed as a circular tube and is installed to surround the plurality of nozzles 1230. A first end portion of the nozzle casing 1260 is coupled to the duct assembly 1250, and a second end portion of the nozzle casing 1260 is coupled to the head plate 1270 installed behind the nozzle casing 1260. The plurality of nozzles 1230 may be installed within the nozzle casing 1260 and may be arranged in the circumferential direction of the nozzle casing 1260 at spaced intervals.

The head plate 1270 has a circular plate shape, and a nozzle flange 1233 (see FIG. 3) supporting the nozzle 1230 may be fixed thereto. A fuel injector for supplying fuel to the nozzle 1230 may be installed on the head plate 1270.

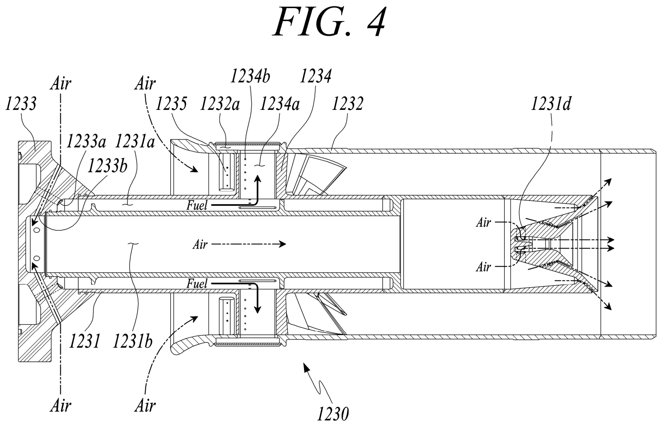

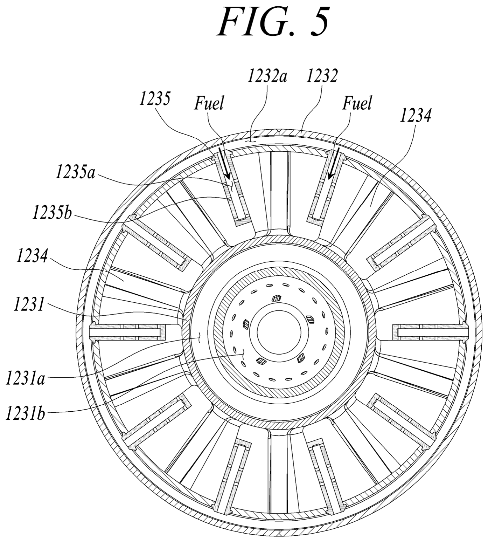

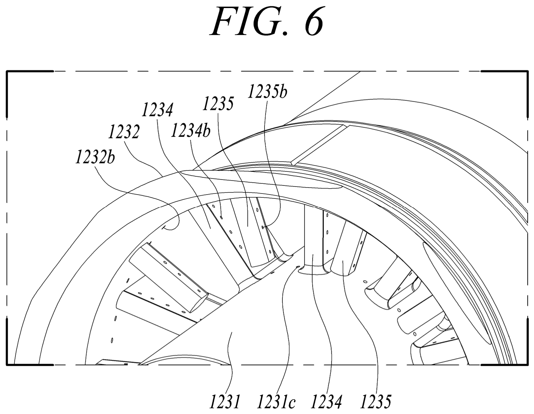

FIG. 3 is a perspective view showing a nozzle for a combustor. FIG. 4 is a sectional view showing a side section of the nozzle. FIG. 5 is a sectional view showing a frontal section of the nozzle. FIG. 6 is an enlarged-perspective view showing a nozzle vane and a nozzle rod.

Referring to FIGS. 3 and 4, the nozzle 1230 includes a nozzle flange 1233, a center tube 1231 having a passage through which fuel and air flow, a nozzle shroud 1232 surrounding the center tube 1231, a plurality of nozzle vanes 1234 formed between the center tube 1231 and the nozzle shroud 1232 to guide a fuel flow, and a nozzle rod 1235 coupled to the nozzle shroud 1232 and arranged in an offset position relative to each nozzle vane 1234.

The nozzle flange 1233 is fixed to the head plate 1270 and supports the nozzle 1230. The nozzle flange 1233 may have various shapes, such as a circular plate shape, a polygonal shape, or a combination thereof.

The center tube 1231 may be coupled to the nozzle flange 1233. A front surface of the nozzle flange 1233 may include a fuel inlet 1233a supplying fuel to the center tube 1231. The fuel inlets 1233a may include a plurality of fuel inlets, and the plurality of fuel inlets 1233a may be arranged in the circumferential direction at intervals on the nozzle flange 1233. The fuel inlets 1233a may be connected to a ring-shaped fuel passage 1231a formed in the center tube 1231.

A rear surface of the nozzle flange 1233 may include an air inlet 1233b to supply air to the center tube 1231. The air inlet 1233b may include a plurality of air inlets arranged at intervals in the circumferential direction on the nozzle flange 1233. The plurality of the air inlets 1233b may be arranged offset from the plurality of fuel inlets 1233a in the circumferential direction. The air inlets 1233b may be connected to an air passage 1231b arranged at a central portion of the center tube 1231.

The center tube 1231 is coupled to the nozzle flange 1233 and extends in the longitudinal direction. The nozzle flange 1233 is located at a front space of the center tube 1231, and a combustion chamber 1240 is located at a rear space thereof.

The center tube 1231 may have a double-tubular structure including the air passage 1231b and the fuel passage 1231a. The air passage 1231b is formed at a central portion of the center tube 1231, and the fuel passage 1231a may have a ring shape surrounding the air passage 1231b. Accordingly, air and fuel may be separated from each other in the center tube and flow rearward.

The air passage 1231b may be discharged at a rear end of the center tube 1231. The rear end of the center tube 1231 has a recessed structure that is closed toward a forward direction, and the central portion and the edge thereof may include an air outlet 1231d to discharge air. With this structure, the center tube 1231 supplies air into the combustion chamber 1240, thereby reducing the thermal load on the turbine and nitrogen oxide (NOx) emissions, and preventing flashback of flame in the combustion chamber 1240 from flowing backward to the nozzle 1230.

The fuel passage 1231a has a ring shape and may supply fuel to each nozzle vane 1234 arranged between the center tube 1231 and the nozzle shroud 1232. Specifically, the fuel passage 1231a may be fluidly connected to a vane cavity 1234a formed in the nozzle vane 1234. Fuel flowing rearward along the fuel passage 1231a may be directed outward in the radial direction and supplied to the vane cavity 1234a.

The nozzle shroud 1232 may have a tubular structure surrounding the center tube 1231. The nozzle shroud 1232 may be arranged to be spaced apart from the center tube 1231 in the radial direction. Air may be introduced from the front space of the nozzle shroud 1232 and flow rearward along a ring-shaped space formed between the nozzle shroud 1232 and the center tube 1231.

A shroud chamber 1232a is formed in the nozzle shroud 1232. The shroud chamber 1232a may have a ring shape, as shown in FIG. 5, or a plurality of shroud chambers may be arranged in a ring-shaped configuration. The shroud chamber 1232a is connected to the vane cavity 1234a and receives fuel from the vane cavity 1234a.

The nozzle vanes 1234 may be formed between the nozzle shroud 1232 and the center tube 1231. The plurality of nozzle vanes 1234 may be disposed in the circumferential direction between the nozzle shroud 1232 and the center tube 1231. The plurality of nozzle vanes 1234 may be arranged in a ring shape and guide the flow of air introduced from the front space rearward.

The vane cavity 1234a may be formed in each nozzle vane 1234 to allow fuel to flow therethrough. The vane cavity 1234a may have a cuboid shape, or may be modified within the range known to those skilled in the art, such as a cylindrical, an elliptic cylindrical, or the like.

The vane cavity 1234a may be connected to the fuel passage 1231a at a radially inner portion and to the shroud chamber 1232a at a radially outer portion. Fuel supplied to the fuel passage 1231a flows through the vane cavity 1234a outward in the radial direction and may further flow into the shroud chamber 1232a.

Vane spraying holes 1234b may be formed on the surface of each nozzle vane 1234. The plurality of vane spraying holes 1234b may be spaced apart in the radial direction of each nozzle vane 1234. The vane spraying holes 1234b may be fluidly connected to the vane cavity 1234a, such that fuel flowing through the vane cavity 1234a may be sprayed outward from each nozzle vane 1234.

The vane spraying holes 1234b may be biased toward the front space of each nozzle vane 1234. In other words, the vane spraying holes 1234b may be biased toward a leading edge of each nozzle vane 1234. The vane spraying holes 1234b may be oriented toward an adjacent nozzle vane 1234. Specifically, the vane spraying holes 1234b may be formed on a side surface of each nozzle vane 1234, and a pair of adjacent nozzle vanes 1234 may be arranged such that the vane spraying holes 1234b thereof face each other. Accordingly, fuel may be sprayed from the vane spraying holes 1234b into the space between a pair of nozzle vanes 1234. As a result, air flowing along the pair of nozzle vanes 1234 may be mixed with fuel and flow toward the rear space of the nozzle 1230.

Referring to FIG. 5, the nozzle rod 1235 may be coupled to an inner portion of the nozzle shroud 1232 in the radial direction. The nozzle rod 1235 may protrude radially inward from the nozzle shroud 1232 and be spaced apart from the center tube 1231. The nozzle rod 1235 may include a plurality of nozzle rods arranged in the circumferential direction of the nozzle shroud 1232 at predetermined intervals. The plurality of nozzle rods 1235 may be arranged in a ring shape.

A rod cavity 1235a may be formed in each nozzle rod 1235. The rod cavity 1235a may extend in the radial direction. The rod cavity 1235a may have a cylindrical shape or an elliptical cylindrical shape. However, the shape of the rod cavity is not limited thereto and may be modified within the range readily understood and implemented by those skilled in the art, such as a quadrangular prism.

The rod cavity 1235a may be connected to the shroud chamber 1232a at a radially outer side thereof. The rod cavity 1235a may communicate with the same shroud chamber 1232a as the vane cavity 1234a. Therefore, fuel supplied from the vane cavity 1234a to the shroud chamber 1232a may flow radially inward and be supplied to the rod cavity 1235a.

Rod spraying holes 1235b may be formed on a surface of each nozzle rod 1235. A plurality of rod spraying holes 1235b may be formed in the radial direction of the nozzle rod 1235 at intervals therebetween. The rod spraying holes 1235b is connected to the rod cavity 1235a, and fuel flowing along the rod cavity 1235a may be sprayed radially outward through the rod spraying holes 1235b.

The rod spraying holes 1235b may be formed on a side surface of each nozzle rod 1235. A pair of adjacent nozzle rods 1235 may be arranged such that the respective rod spraying holes 1235b face each other. Accordingly, the rod spraying holes 1235b may spray fuel into a space between the pair of nozzle rods 1235. As a result, air flowing along the pair of nozzle rods 1235 may be mixed with fuel and move.

At this point, the plurality of nozzle rods 1235 may be arranged to be circumferentially offset from the plurality of nozzle vanes 1234. In other words, when viewed from the front of the nozzle 1230, the plurality of nozzle rods 1235 may be positioned between the plurality of nozzle vanes 1234. Therefore, each nozzle rod 1235 may spray fuel into the air flowing between a pair of adjacent nozzle vanes 1234. As the air flows rearward away from the nozzle vanes 1234, the air between the pair of nozzle vanes 1234 may contain fuel supplied by the nozzle rods 1235. As a result, air flowing between the center tube 1231 and the nozzle shroud 1232 may be uniformly mixed with fuel in the circumferential direction.

Referring to FIG. 4, the nozzle rod 1235 may be positioned further forward than each nozzle vane 1234. That is, the nozzle rod 1235 may be arranged between a pair of nozzle vanes 1234 and may be located upstream of the nozzle vanes 1234 in the air flow direction. Therefore, air flowing from the front space of the nozzle 1230 toward the rear space thereof may primarily receive fuel from the nozzle rod 1235 and may secondarily receive fuel from the nozzle vanes 1234.

Air introduced from the front space of the nozzle 1230 may first collide with the nozzle rod 1235, thereby generating turbulence. Due to the turbulence, air introduced between a pair of nozzle vanes 1234 may be efficiently mixed with fuel, thereby allowing the fuel-air mixture to become more uniform.

Furthermore, because the nozzle rod 1235 is arranged at a position farther forward than each nozzle vane 1234, a residence time for mixing air and fuel is increased, thereby allowing air and fuel to be mixed more efficiently. In addition, fuel sprayed from the nozzle rod 1235 and fuel sprayed from each nozzle vane 1234 do not come into contact with each other, thereby preventing damage to the nozzle rod 1235 and the nozzle vanes 1234. Accordingly, the durability of the nozzle rod 1235 and the nozzle vanes 1234 may be improved.

Referring to FIG. 6, tube spraying holes 1231c may be formed on an outer circumferential surface of the center tube 1231. A plurality of tube spraying holes 1231c may be spaced apart in the circumferential direction of the center tube 1231. The plurality of tube spraying holes 1231c may be positioned between the plurality of nozzle vanes 1234. The tube spraying holes 1231c may be oriented vertically toward a central portion of the center tube 1231, or alternatively, may be inclined in the longitudinal direction or the circumferential direction.

The tube spraying holes 1231c may be fluidly connected to the fuel passage 1231a of the center tube 1231. Fuel flowing through the fuel passage 1231a may be sprayed between a pair of nozzle vanes 1234 through the tube spraying holes 1231c. Air introduced between the pair of nozzle vanes 1234 may be mixed with fuel sprayed through the tube spraying holes 1231c. As a result, air flowing between the center tube 1231 and the nozzle shroud 1232 may be uniformly mixed with fuel, even in an inner portion in the radial direction.

Furthermore, each tube spraying hole 1231c may be formed adjacent to a front end of each nozzle vane 1234. That is, each tube spraying hole 1231c may be positioned adjacent to a leading edge of each nozzle vane 1234. Accordingly, a residence time for air to mix with fuel sprayed through the tube spraying holes 1231c is increased, thereby allowing air and fuel to be more uniformly mixed.

In addition, shroud spraying holes 1232b may be formed on an inner circumferential surface of the nozzle shroud 1232. A plurality of shroud spraying holes 1232b may be spaced apart in the circumferential direction of the nozzle shroud 1232. The plurality of shroud spraying holes 1232b may be positioned between the plurality of nozzle vanes 1234. The plurality of shroud spraying holes 1232b may be oriented vertically on an inner circumferential surface of the nozzle shroud 1232, or alternatively, may be inclined in the longitudinal direction or the circumferential direction.

The shroud spraying holes 1232b may be connected to the shroud chamber 1232a. Fuel supplied to the shroud chamber 1232a may be sprayed between a pair of nozzle vanes 1234 via the shroud spraying holes 1232b. Air introduced between the pair of nozzle vanes 1234 may be mixed with fuel sprayed through the shroud spraying holes 1232b. As a result, air flowing between the center tube 1231 and the nozzle shroud 1232 may be uniformly mixed with fuel, even in a radially outer portion.

Furthermore, each shroud spraying hole 1232b may be formed adjacent to a front end of each nozzle vane 1234. That is, each shroud spraying hole 1232b may be positioned near a leading edge of each nozzle vane 1234. Accordingly, a residence time for air to mix with fuel sprayed through the shroud spraying holes 1232b is increased, thereby allowing air and fuel to be more uniformly mixed.

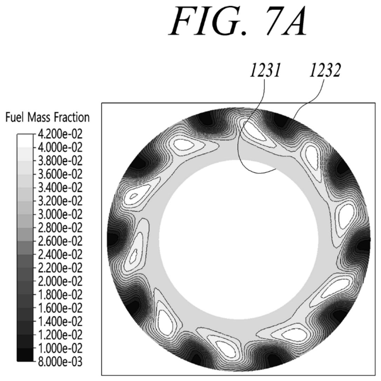

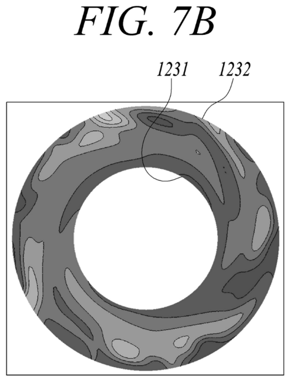

FIGS. 7A and 7B are views showing the distribution of fuel ratio at a rear end of the nozzle in comparison to a conventional nozzle. Herein, the fuel ratio refers to the proportion of fuel in the fuel-air mixture.

FIG. 7A shows a space between the center tube 1231 and the nozzle shroud 1232 of a conventional nozzle, in which fuel is unevenly distributed in both the radial and circumferential directions. That is, due to inefficient mixing of fuel and air, a fuel ratio is relatively high at a radially central portion and relatively low at a radially outer portion, while the distribution can be substantially uniform in the circumferential direction. In contrast, FIG. 7B shows the nozzle 1230 according to an exemplary embodiment, in which fuel is relatively uniformly distributed in both the radial and circumferential directions.

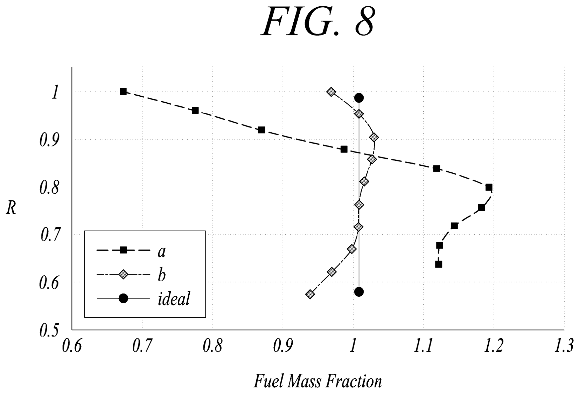

FIG. 8 is a graph showing comparative data for the radial distribution of the fuel ratio shown in FIGS. 7A and 7B. In FIG. 8, a horizontal axis represents a dimensionless value corresponding to a relative fuel ratio, with an ideal fuel ratio in the mixed fuel set to 1, and a vertical axis represents a radial distance ratio between the center tube 1231 and the nozzle shroud 1232.

Referring to FIG. 8, in the ideally mixed fuel, a fuel ratio is theoretically constant at 1 in the radial direction, extending from the center tube (R = 0.5) to the nozzle shroud (R = 1). That is, when fuel is mixed ideally, fuel is uniformly distributed between the center tube 1231 and the nozzle shroud 1232 in the radial direction.

In the conventional nozzle shown in (a), it can be observed that a fuel ratio deviates significantly from 1 due to uneven fuel mixing. That is, in the conventional nozzle, a significant deviation exists between the theoretical fuel ratio and the actual fuel ratio, and the fuel ratio decreases significantly toward the nozzle shroud (R = 1).

In contrast, in the nozzle 1230 according to the exemplary embodiment, as represented in (b), it can be observed that the actual fuel ratio is close to 1, and only a small deviation exists between the theoretical fuel ratio and the actual fuel ratio. That is, in the nozzle 1230 according to the exemplary embodiment, fuel is more uniformly distributed in the radial direction than in the conventional nozzle, indicating that fuel is uniformly mixed with air in the radial direction. As a result, the nozzle 1230 can significantly reduce emissions of nitrogen oxide (NOx) and carbon monoxide (CO).

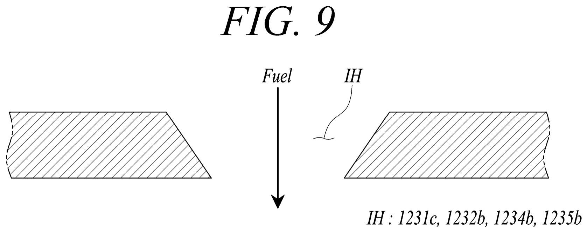

Hereinbelow, the gas turbine according to a second exemplary embodiment will be described. FIG. 9 is a sectional view showing a spraying hole of the nozzle of the gas turbine according to the second exemplary embodiment.

The gas turbine according to the second exemplary embodiment has the same configuration as the gas turbine according to the first exemplary embodiment, except for the shape of a spraying hole IH, and descriptions of components that are identical to those in the first exemplary embodiment are omitted.

Here, the spraying hole IH is at least one selected from a group consisting of the tube spraying holes 123 1c, the shroud spraying holes 1232b, the vane spraying holes 1234b, and the rod spraying holes 1235b.

Referring to FIG. 9, the spraying hole IH may have a shape in which a sectional area decreases in the flow direction of fuel. That is, the spraying hole IH may include an entrance having a relatively wide sectional area and an exit having a relatively narrow sectional area. The sectional area of the spraying hole IH may gradually decrease from the entrance toward the exit. Accordingly, a fuel pressure at the entrance of the spraying hole IH may be higher than a fuel pressure at the exit of the spraying hole IH.

When the pressure ratio of the spraying hole IH is defined as the fuel pressure at the entrance divided by the fuel pressure at the exit, the pressure ratio of the spraying hole IH is greater than 1 and less than or equal to 2. More specifically, the pressure ratio of the spraying hole IH may be greater than 1 and less than or equal to 1.5. Preferably, the pressure ratio of the spraying hole IH may be greater than 1 and less than or equal to 1.32. In this case, the fuel pressure at the entrance refers to the total fuel pressure at the entrance of the spraying hole IH, and the fuel pressure at the exit refers to the static pressure of fuel at the exit of the spraying hole IH.

As described above, fuel may be sprayed at high pressure between the center tube 1231 and the nozzle shroud 1232 through the spraying hole IH. That is, the fuel-spraying pressure is increased, thereby ensuring efficient mixing of air and fuel.

Hereinbelow, the gas turbine according to a third exemplary embodiment will be described.

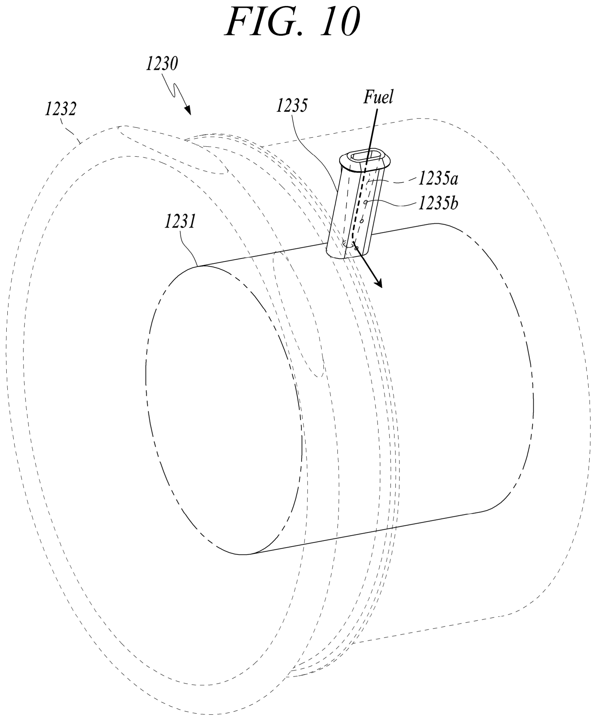

FIG. 10 is a projected-perspective view showing the nozzle rod of the gas turbine according to a third exemplary embodiment.

The gas turbine according to the third exemplary embodiment has the same configuration as the gas turbine according to the first exemplary embodiment, except for the shape of the rod cavity 1235a, and descriptions of the components that are identical to those in the first exemplary embodiment are omitted.

Referring to FIG. 10, the rod cavity 1235a may be configured such that a sectional area thereof decreases in the flow direction of fuel. Fuel flows toward a radially inner portion in the rod cavity 1235a. Therefore, the rod cavity 1235a may be formed such that the sectional area of the flow path decreases in the direction toward the radially inner portion.

For example, the rod cavity 1235a may have a truncated conical shape, in which the radially inner portion has a narrow sectional area and a radially outer portion has a wide sectional area. However, the shape is not necessarily limited thereto, and the shape of the rod cavity may be modified within the range that can be utilized by those skilled in the art, such as a truncated cone or trapezoidal column with the radially inner portion having a narrow sectional area.

Accordingly, even when fuel is sprayed outward through the rod spraying holes 1235b, the pressure loss of fuel flowing in the rod cavity 1235a can be reduced. As a result, the spraying pressure of the nozzle rod 1235 is increased, thereby ensuring uniform mixing of air and fuel.

While one or more exemplary embodiments have been described with reference to the accompanying drawings, it will be apparent to those skilled in the art that various modifications and variations can be made through additions, substitutions, changes, or deletions of components without departing from the scope of the disclosure as disclosed in the accompanying claims, and these modifications and changes fall within the scope of the disclosure as defined in the appended claims.

## Claims

1. A nozzle for a combustor, the nozzle comprising:
a center tube comprising a fuel passage configured to allow fuel to flow therein;
a nozzle shroud surrounding the center tube and comprising a shroud chamber;
a plurality of nozzle vanes disposed between the center tube and the nozzle shroud, each nozzle vane configured to guide a fuel flow and spray fuel; and
a nozzle rod arranged offset from each nozzle vane and configured to spray the fuel between the plurality of nozzle vanes.

2. The nozzle of claim 1, wherein the nozzle rod is arranged at a position farther forward than the nozzle vane.

3. The nozzle according to any one of the preceding claims, wherein the center tube comprises a plurality of tube spraying holes formed in a circumferential direction at intervals therebetween, the tube spraying holes being connected to the fuel passage.

4. The nozzle according to any one of the preceding claims, wherein the nozzle shroud comprises a plurality of shroud spraying holes formed in a circumferential direction at intervals therebetween, the shroud spraying holes being connected to the shroud chamber.

5. The nozzle according to any one of the preceding claims, wherein each nozzle vane comprises a vane cavity therein, the vane cavity connecting the fuel passage and the shroud chamber.

6. The nozzle of claim 5, wherein each nozzle vane comprises a plurality of vane spraying holes formed in a radial direction at intervals therebetween, the vane spraying holes being connected to the vane cavity.

7. The nozzle according to any one of the preceding claims, wherein the nozzle rod comprises a rod cavity formed therein, the rod cavity being connected to the shroud chamber.

8. The nozzle of claim 7, wherein the nozzle rod comprises a plurality of rod spraying holes formed in a radial direction at intervals therebetween, the rod spraying holes being connected to the rod cavity.

9. The nozzle of claim 7 or 8, wherein the rod cavity has a sectional area that decreases in a direction from a radially outer portion to a radially inner portion.

10. The nozzle according to any one of the preceding claims, wherein the nozzle rod comprises a plurality of nozzle rods, the plurality of nozzle rods being arranged in a ring shape.

11. A gas turbine comprising:
a compressor configured to compress air introduced from an outside;
a combustor configured to mix fuel with the air compressed by the compressor and combust a mixture of the fuel and air to produce combustion gas; and
a turbine comprising a plurality of turbine blades rotated by combustion gas produced by the combustor,
wherein the combustor comprises a plurality of nozzles configured to spray the fuel and air,
wherein each of the plurality of nozzles comprises:
a center tube comprising a fuel passage configured to allow the fuel to flow therein;
a nozzle shroud surrounding the center tube and comprising a shroud chamber;
a plurality of nozzle vanes disposed between the center tube and the nozzle shroud, each nozzle vane configured to guide a fuel flow and spray fuel; and
a nozzle rod arranged offset from each nozzle vane and configured to spray the fuel between the plurality of nozzle vanes.

12. The gas turbine of claim 11, wherein the center tube comprises a plurality of tube spraying holes formed in a circumferential direction at intervals therebetween, the tube spraying holes being connected to the fuel passage.

13. The gas turbine of claim 11 or 12, wherein the nozzle shroud comprises a plurality of shroud spraying holes formed in a circumferential direction at intervals therebetween, the shroud spraying holes being connected to the shroud chamber.

14. The gas turbine of claim 11, 12 or 13, wherein each nozzle vane comprises a vane cavity formed therein, the vane cavity connecting the fuel passage and the shroud chamber, and
the nozzle vane comprises a plurality of vane spraying holes formed in a radial direction at intervals therebetween, the vane spraying holes being connected to the vane cavity.

15. The gas turbine of claim 11, 12, 13 or 14, wherein the nozzle rod comprises a rod cavity formed therein, the rod cavity being connected to the shroud chamber, and
the nozzle rod comprises a plurality of rod spraying holes formed in a radial direction at intervals therebetween, the rod spraying holes being connected to the rod cavity.
